Europäisches Patentamt

European Patent Office

Office européen des brevets

(11) Veröffentlichungsnummer: **0 139 912**
**A2**

(12) **EUROPÄISCHE PATENTANMELDUNG**

(21) Anmeldenummer: **84109209.1**

(22) Anmeldetag: **03.08.84**

(51) Int. Cl.⁴: **G 05 B 23/02**

(30) Priorität: **22.08.83 DE 3330233**

(43) Veröffentlichungstag der Anmeldung:
**08.05.85 Patentblatt 85/19**

(84) Benannte Vertragsstaaten:
**FR GB IT**

(71) Anmelder: **Deutsche Forschungs- und Versuchsanstalt für Luft- und Raumfahrt e.V.**
**Linder Höhe**
**D-5000 Köln 90(DE)**

(72) Erfinder: **Freymann, Raymond, Dr. Ing.**
**Tegeler Weg 32**
**D-3400 Göttingen(DE)**

(74) Vertreter: **Patentanwälte Dipl.-Ing. Rudolf Bibrach**
**Dipl.-Ing. Elmar Rehberg**
**Pütterweg 6 Postfach 738**
**D-3400 Göttingen(DE)**

(54) Verfahren und Vorrichtung zur Einstellung des PID-Verhaltens von Reglerkompensationsnetzwerken, insbesondere bei Hydropulsmaschinen.

(57) Verfahren und Vorrichtungen zur Einstellung des PID-Verhaltens von Reglerkompensationsnetzwerken, insbesondere bei Hydropulsmaschinen, sollen auch bei komplizierten Prüfkörpern in optimaler Weise durchführbar sein, ohne daß die Gefahr besteht, den Prüfkörper zu zerstören und ohne daß langwierige Einstellarbeiten erforderlich sind, wobei nach einer genauen Vorschrift vorgegangen werden kann. Dies wird hier dadurch erreicht, daß bei geschlossenem Regelkreis dessen Stabilitätsortskurve bestimmt wird, die eine Transformierte der sog. Nyquist-Ortskurve darstellt und dann das Reglerkompensationsnetzwerk so lange verstellt wird, bis die Stabilitätsortskurve einen gewünschten Verlauf aufweist.

Fig.1 a

- 1 -

Verfahren und Vorrichtung zur Einstellung des PID-Verhaltens
von Reglerkompensationsnetzwerken, insbesondere bei Hydropulsmaschinen

Die Erfindung betrifft ein Verfahren und eine Vorrichtung zur
Einstellung des PID-Verhaltens von Reglerkompensationsnetzwerken, insbesondere bei Hydropulsmaschinen sowie ein Verfahren zur Überwachung von zeitlichen Änderungen an, mittels
Hydropulsmaschinen, untersuchten Prüfkörpern.

Hydropulsmaschinen werden üblicherweise dazu benutzt, das
elastomechanische Verhalten von Prüfkörpern zu ermitteln und
zu untersuchen. Sie beinhalten bekanntlich ein Reglerkompensationsnetzwerk, welches vor jeder Untersuchung einer sorgfältigen Einstellung bedarf. Es wird als Ziel angesehen, eine
gute Übereinstimmung im zeitlichen Verlauf zwischen der Sollwertgröße und der Regelgröße zu erreichen. Dazu bedarf es
einer geeigneten Einstellung des PID-Verhaltens des Reglerkompensationsnetzwerkes. Da das Übertragungsverhalten der
Regelstrecke von Prüfaufbau / Prüfkörper abhängig ist, ist
erkennbar, daß die PID-Einstellung des Kompensationsnetzwerkes
für jeden Versuch auf den jeweiligen Prüfaufbau / Prüfkörper
abgestimmt werden muß.

Das in der Praxis am häufigsten verwendete Verfahren besteht
darin, das Einstellen des Kompensationsnetzwerkes mit Hilfe
von Sprungfunktionen durchzuführen. Dabei wird dem Regelkreis
über den Sollwerteingang eine Sprungfunktion zugeführt und es
wird der zeitliche Verlauf der Antwort der Regelgröße auf das
Sprungsignal beobachtet. Die PID-Einstellung des Kompensationsnetzwerkes wird dann als zufriedenstellend angesehen, wenn die Regelgröße in minimaler Zeit auf den Sprungendwert einschwingt
und die Regelgröße ein geringes Überschwingen um den Sprungendwert aufweist.

Diese beiden Forderungen stehen im Widerspruch zueinander. Die
erste Bedingung erfordert eine hohe Regelkreisverstärkung, die
aber die Regelkreisstabilität verringert und damit zu einem ungünstigen Überschwingverhalten führt, was also der zweiten Bedingung widerspricht. Demzufolge bestehen unterschiedliche Forderungen hinsichtlich einer guten Regelgenauigkeit und einer
guten Stabilität des Regelkreises. Die Optimierung beim Einstellen des PID-Verhaltens des Reglerkompensationsnetzwerkes
mit Hilfe von Sprungfunktionen erweist sich oftmals als schwierig. Dies gilt insbesondere dann, wenn es sich beim Prüfaufbau
/ Prüfkörper umkomplizertere elastomechanische Gebilde handelt.
Erwähnt sei hier z.B. der Fall, wo ein Prüfkörper in einem
interessierenden Frequenzbereich eine oder mehrere Eigenfrequenzen aufweist, welche auf sein strukturelles Eigenschwingungsverhalten zurückzuführen sind. Auch dem erfahrenen Versuchsingenieur fehlt in solchen schwierigen Fällen oftmals das
Verständnis, nur anhand der Sprungantwort der Regelgröße auf
die optimale Einstellung des Kompensationsnetzwerkes zu
schließen. Grund dafür ist, daß der Informationsgehalt des
Sprungantwortsignals - insbesondere bei diesen schwierigen
Fällen - zu gering ist.

Als weiterer Nachteil bei der Einstellung des Kompensationsnetzwerkes über Sprungfunktionen erweist sich außerdem, daß
das harte Sprungsignal den Prüfaufbau / Prüfkörper zerstören
kann. Die Empfehlung der Hydropulsmaschinenhersteller in
diesem Fall die PID-Einstellung mit Dummy-Prüfkörpern durchzuführen, ist oft wegen der strukturellen Komplexität des Prüf-

- 3 -

aufbaus / Prüfkörpers aus wirtschaftlichen Gründen nicht
realisierbar. Außerdem ist der Gradient des vom Hydropulszylinder erzeugten Kraftsignals nicht als unendlich steil
anzusehen. Somit ist es nur möglich, den Prüfaufbau / Prüfkörper wegen der nicht ideal steilen Sprungfunktion in
einem begrenzten unteren Frequenzbereich anzuregen. Es
ist durchaus denkbar, daß bei einer Sprungerregung eine
hochfrequente Instabilität des Systems unentdeckt bleibt.

Aufgabe der Erfindung ist es, ein Verfahren zur Einstellung
des PID-Verhaltens von Reglerkompensationsnetzwerken zu
schaffen, welches die oben genannten Mängel nicht aufweist
und welches es auch weniger erfahrenen Versuchsingenieuren
gestattet, die Einstellung auch bei komplizierten Prüfkörpern in optimaler Weise vorzunehmen und gezielt nach einer
wohldefinierten Vorschrift vorzugehen, ohne daß dabei die
Gefahr besteht, den Prüfkörper zu zerstören und ohne daß
langwierige Einstellarbeiten erforderlich sind.

Eine weitere Aufgabe der Erfindung besteht darin, auch das
Verhalten von Prüfkörpern bei Langzeitversuchen zu überwachen.
Weiterhin soll eine Vorrichtung aufgezeigt werden, mit welcher
sich die Verfahren durchführen lassen.

Das Verfahren kennzeichnet sich erfindungsgemäß dadurch, daß
bei geschlossenem Regelkreis dessen Stabilitätsortskurve bestimmt und das Reglerkompensationsnetzwerk so lange verstellt
wird, bis die Stabilitätsortskurve einen gewünschten Verlauf
aufweist. Zweckmäßigerweise wird als Stabilitätsortskurve
eine Transformierte der sog. Nyquist-Ortskurve verwendet. Die
Reglereinstellung läßt sich auf diese Weise nach einer klar
formulierten Vorschrift optimieren, wobei die quantitative Erfassung der Reglerstabilitätsgrenze in Form eines
Amplituden- und Phasenrandes möglich ist und die Reglerstabilitätsüberprüfung im gesamten Frequenzbereich vorgenommen werden kann, so daß sich auch im Falle elastomechanisch schwieriger Prüfaufbauten die Reglereinstellung
gezielt optimieren läßt. Vorzugsweise wird dem Regelkreis
ein breitbandiges Sollwertsignal zugeführt und das sich
ergebende Istwertsignal gemessen und beide Signale zur
Bestimmung der Stabilitätsortskurve miteinander korreliert.
Als Sollwertsignal eignet sich insbesondere ein sog. Sinus-
Sweep-Signal oder auch ein Random-Signal.

Das Verfahren zur Überwachung von zeitlichen Änderungen an
Prüfkörpern kennzeichnet sich dadurch, daß bei geschlossenem
Regelkreis dessen Stabilitätsortskurven zu verschiedenen
Zeitpunkten bestimmt werden und laufend (in einem Komparator)
miteinander verglichen werden. Eine Änderung des dynamischen
Verhaltens des Prüfaufbaus / Prüfkörpers zieht eine Veränderung im Übertragungsverhalten der Regelstrecke nach sich, die
sich anhand der Ortskurve feststellen läßt, so daß frühzeitige
Veränderungen des elastomechanischen Verhaltens des Prüfkörpers feststellbar sind und ein Versuch ggf. frühzeitig abgebrochen werden kann, um Zerstörungen des Prüfkörpers bzw. sich
daraus ergebende Folgeschäden verhindert werden können. Die
zur laufenden Stabilitätsortskurvenbestimmung anfallenden Meßwerte werden hierzu vorteilhafterweise aufgezeichnet und gespeichert. Das Vorgehen entspricht im übrigen dem zur Einstellung des Reglernetzwerkes, wobei während der Überwachung der
Regelkreis nicht mehr vom Versuchsingenieur verstellt zu werden
braucht.

Die Vorrichtung zur Durchführung der Verfahren kennzeichnet
sich durch einen Sinus-Generator zur Erzeugung des Sollwertes
und einem Vektorkomponentenmesser zur Erfassung der Ist- und Sollwerte des geschlossenen Regelkreises. Vorzugsweise
ist dem Vektorkomponentenmesser ein X-Y-Schreiber zur
direkten Darstellung der Ortskurve nachgeschaltet. Eine
weitere Vorrichtung zur Durchführung des Verfahrens kennzeichnet sich durch einen Funktionsgenerator zur Erzeugung
des Sollwertes und ein Fourier-Analysator zur Verarbeitung
der Ist- und Sollwerte des geschlossenen Regelkreises.
Zweckmäßigerweise ist dem Fourier-Analysator ein Speicher-
Oszillograph zur Darstellung der gemessenen Stabilitätsortskurve zugeordnet. Zur Speicherung der Meßwerte ist dem
Fourier-Analysator vorzugsweise ein Datenspeicher zugeordnet.
Mit besonderem Vorteil ist dabei dem Fourier-Analysator ein
Komparator zum Vergleich der im Datenspeicher enthaltenen
Meßwerte mit den neu eingehenden Meßwerten zugeordnet, was
einen automatischen Betrieb und ggf. ein selbsttätiges Abschalten der Anlage ermöglicht. Der Fourier-Analysator, der
Datenspeicher und der Komparator sind zweckmäßigerweise digital arbeitende Einrichtungen, die mindestens einen Rechner
enthalten können.

Die Erfindung wird im folgenden anhand der beiliegenden Zeichnungen im einzelnen erläutert. Dabei zeigen:

Fig. 1a    ein schematisches Blockschaltbild einer Hydropulsanlage;

Fig. 1b    ein schematisches Blockschaltbild eines offenen Regelkreises;

Fig. 1c    das schematische Blockschaltbild eines geschlossenen
           Regelkreises;

Fig. 2     ein schematisches Diagramm zur Darstellung von
           Nyquist-Ortskurven;

Fig. 3      ein schematisches Diagramm zur Darstellung des
Zusammenhanges zwischen Dämpfungsmaß- und Phasenrand für ein System zweiter Ordnung;

Fig. 4a     schematische Diagramme zur Darstellung des Über-
bis 4c      gangs der Nyquist-Ortskurve auf die transformierte
Ortskurve;

Fig. 5a bis 5f      schematische Darstellungen von gemessenen Ortskurven;

Fig. 6      ein schematisches Blockschaltbild der Vorrichtung zur
Messung der Ortskurve mit Hilfe eines Vektorkomponenten-messers;

Fig. 7      ein schematisches Blockschaltbild einer Vorrichtung
zur Messung der Ortskurve mittels eines Fourier-
Analysators und

Fig. 8      ein schematisches Blockschaltbild einer Vorrichtung
gemäß Fig. 7 mit zusätzlichen Datenspeichern und
einem Komparator.

In Fig. 1a ist das Blockschaltbild einer Hydropulsanlage 1 mit
den zugehörigen Regeleinrichtungen schematisch dargestellt. Der
Hydropulszylinder 2 wirkt dabei auf den Prüfaufbau bzw. Prüfkörper 3 ein. Die Ansteuerung des Hydropulszylinders 2 erfolgt
dabei über das PID-Kompensationsnetzwerk 4, welchem ein Sollwertsignal w zugeführt wird. Zugleich wird dem Kompensationsnetzwerk 4 das sich ergebende Istwertsignal y zugeleitet. Dies
erfolgt zweckmäßigerweise über einen Differenzverstärker 5, in

- 7 -

welchem das Sollwertsignal w und das Istwertsignal y voneinander subtrahiert werden, so daß dem Kompensationsnetzwerk 4 lediglich das Differenzsignal w - y zugeleitet wird.

Für Stabilitätsbetrachtungen an offenen (aufgeschnittenen) Regelkreisen werden in der einschlägigen Literatur eine Reihe von Methoden angegeben. Die Vorgehensweise bei der bekanntesten dieser Methoden besteht darin, die Stabilität des geschlossenen Regelkreises aus dem Übertragungsverhalten des offenen Regelkreises zu bestimmen (Nyquist-Stabilitätskriterium). Diese Vorgehensweise ist für eine Anwendung in der Praxis jedoch nur dann sinnvoll, wenn die experimentelle Ermittlung der Ortskurve des offenen Regelkreises möglich ist.

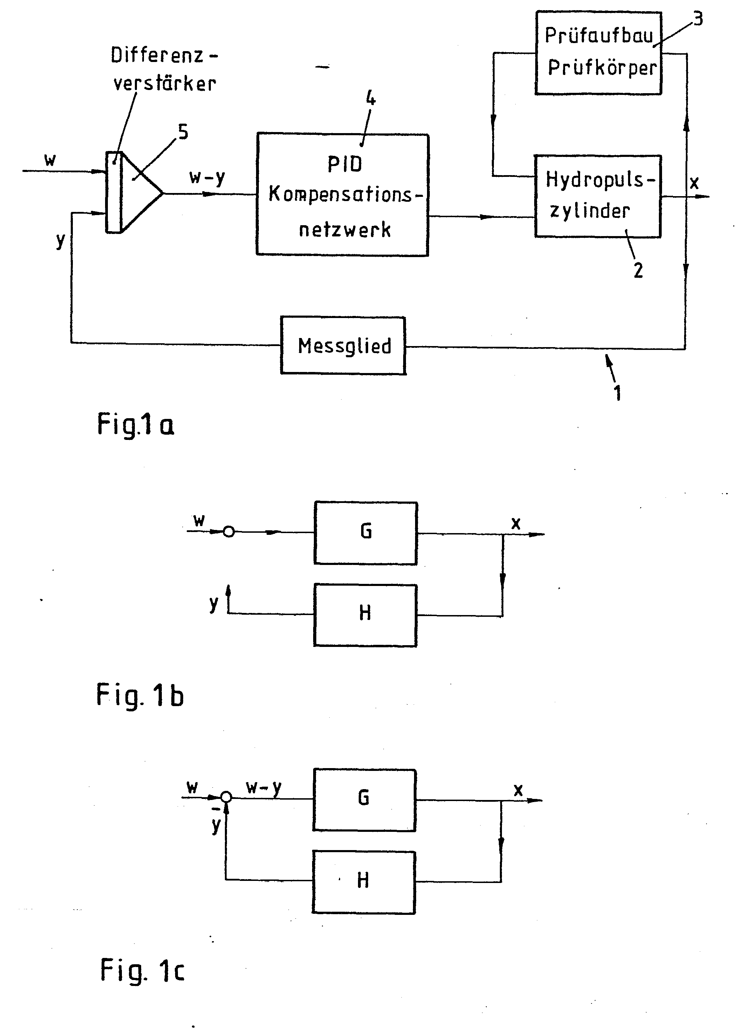

Für den in Fig. 1a dargestellten Regelkreis einer Hydropulsmaschine kann in vereinfachter Weise das in Fig. 1b aufgezeichnete Blockschaltbild für den offenen Regelkreis angegeben werden. Dabei kennzeichnet G die Übertragungsfunktion des Vorwärtszweiges, bestehend aus PID-Kompensationsnetzwerk, Hydropulszylinder und Prüfaufbau / Prüfkörper, und H die Übertragungsfunktion des Rückwärtszweiges mit dem Meßglied. Für die Übertragungsfunktion F des offenen Regelkreises kann geschrieben werden:

(1)    $F = y/w = G \times H$

Das Nyquist-Stabilitätskriterium besagt nun:

a)    Ein geschlossener Regelkreis ist dann und nur dann stabil, wenn die Ortskurve der Übertragungsfunktion des offenen Regelkreises F. - für den Fall, daß diese Übertragungsfunktion keine (instabilen) Pole mit positiven Realteilen aufweist - den Punkt (-1, i x o) nicht umschließt.

b)   Falls die Übertragungsfunktion des offenen Regelkreises n
     Pole mit positivem Realteil aufweist, ist der geschlossene Regelkreis dann und nur dann stabil, wenn die Ortskurve der Übertragungsfunktion des offenen Regelkreises
     den Punkt (-1, i x o) n-Mal im Gegenuhrzeigerdrehsinn umschließt.

Für die hier relevanten dynamischen Untersuchungen ist nur der
Punkt a) von Bedeutung, da davon ausgegangen werden kann, daß
die Übertragungsfunktion des offenen Regelkreises einer Hydropulsmaschine (einschließlich Prüfaufbau / Prüfkörper) dynamisch
stabil ist.

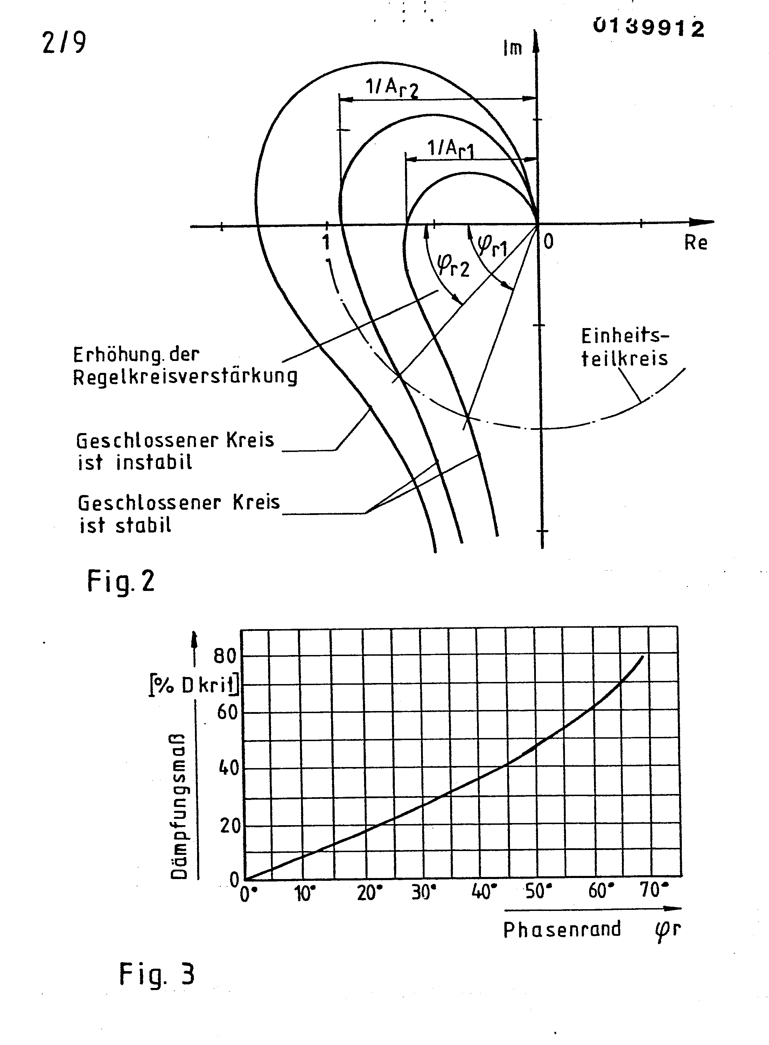

Zusätzlich zur absoluten Stabilität eines Regelkreises gibt
das Nyquist-Ortskurvendiagramm auch Aufschluß über die relative Stabilität des geschlossenen Regelkreises. Die relative
Stabilität wird, wie in Fig. 2 dargestellt, in Form eines
Amplitudenrandes Ar und eines Phasenrandes $\varphi$r angegeben. Diese
Stabilitätswerte sind wie folgt definiert:

Ar :    Faktor, um den die Kreisverstärkung erhöht werden
        muß, damit /F/= 1 bei $\varphi$ = 180°

 r :    Zusätzlicher Phasenwinkel, der auftreten muß, damit
        /F/= 1, bei $\varphi$ = 180° .

Es besteht - zumindest für Systeme zweiter Ordnung - ein eindeutiger Zusammenhang zwischen dem Phasenrand und dem Dämpfungsmaß des geschlossenen Regelkreises (Fig. 3). Der in
dieser Figur dargestellte Zusammenhang gilt in erster Näherung auch dann, wenn der Regelkreis ein System höherer Ordnung ist, dessen transientes Verhalten jedoch überwiegend
durch ein Paar von dominierenden unterkritisch gedämpften Wurzeln (Nullstellen des Polynoms des Nenners der Über-tragungsfunktion des geschlossenen Regelkreises) bestimmt wird. Für einen zufriedenstellenden Betrieb des Regelkreises sollen, je nach Anwendungsfall, folgende Richtwerte eingehalten werden: Ar = 2,5 ...1o und $\varphi r = 30^\circ$ ... $60^\circ$.

Die hier aufgeführten Überlegungen zeigen, daß durch die Lage der Nyquist- Ortskurve (für den offenen Regelkreis) eine Reihe von Aussagen bezüglich des Stabilitätsverhaltens des geschlossenen Regelkreises gemacht werden können. Leider ist es nicht möglich, die Ortskurve des offenen Regelkreises einer Hydropulsmaschine direkt auf experimentellem Wege zu bestimmen, weil eine Hydropulsmaschine nur im geschlossenen Regelkreisbetrieb <u>statisch</u> <u>stabil</u> betrieben werden kann. Da also Untersuchungen an Hydropulsmaschinen nur bei geschlossenem Regelkreis durchgeführt werden können, ist es von Bedeutung, eine Methode zu schaffen, welche es erlaubt, aus dem Übertra-gungsverhalten des geschlossenen Regelkreises, Rückschlüsse auf den Verlauf der Nyquist-Ortskurve zu ziehen, was im Folgenden gezeigt wird:

Der geschlossene Regelkreis einer Hydropulsmaschine ist schematisch in Fig. 1c dargestellt. Für die Übertragungsfunktion (y/w)g kann geschrieben werden:

(2)   (y/w)g = GH / (1+GH),

oder unter Berücksichtigung von Gleichung (1):
(3)   (y/w)g = F / (1+F).

Eine weitere Umformung der Gleichung (3) liefert:

(4)   (w/y)g = 1 + 1/F.

Der Frequenzgang der Übertragungsfunktion (w/y)g von Hydropulsmaschinen kann experimentell direkt ermittelt werden.
Es ist dafür lediglich erforderlich, die Antwort des Istwertes y auf ein breitbandiges, bekanntes, von außen zugeführtes, Sollwertsignal w, z.B. in Form eines Random- oder
Sinus-Sweep-Signals, zu ermitteln und diese beiden Größen
miteinander zu korrelieren.

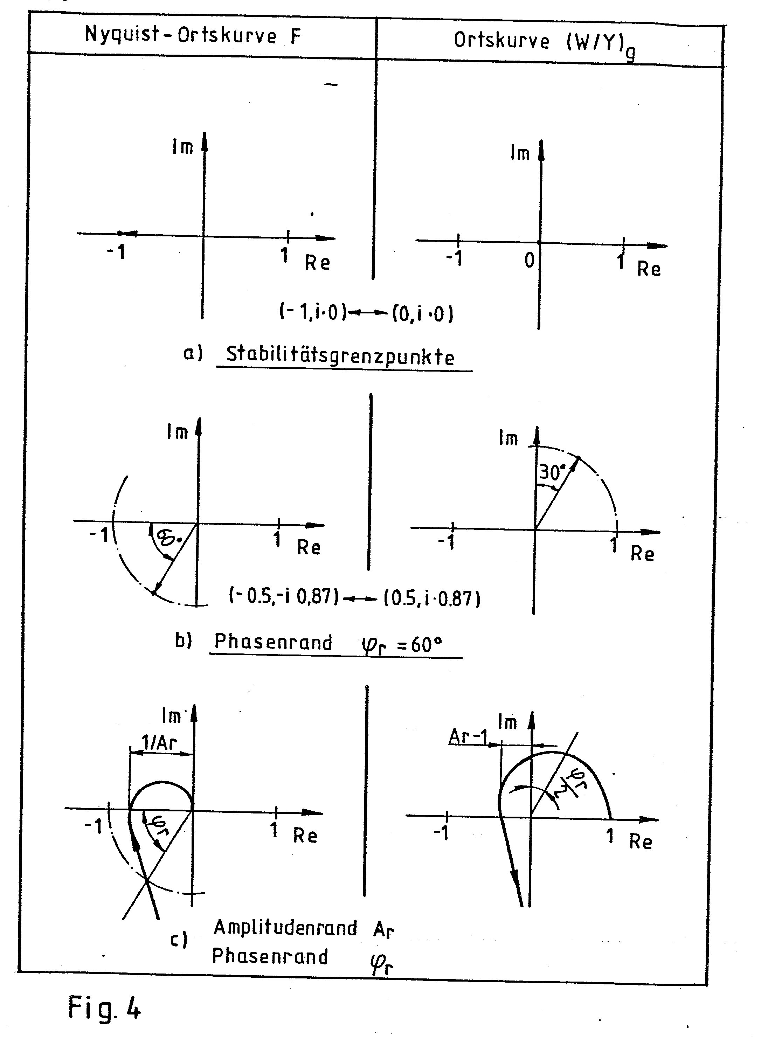

Wird ein erwünschter Verlauf der Nyquist-Ortskurve - in Form
eines Phasen- und/oder Amplitudenrandes - vorgegeben, so
können mit Hilfe der Gleichung (4) die entsprechenden charakteristischen Werte des Ortskurvenverlaufs von (w/y)g festgelegt werden. Fig. 4a zeigt, daß der die Stabilität des geschlossenen Regelkreises kennzeichnende Punkt (-1, i x O) der
Ortskurve F - durch die Abbildung nach Gleichung (4) - in den
Punkt (o, i x o) der Ortskurve (w/y)g übergeführt wird. Dementsprechend gilt folgendes Kriterium für die dynamische Stabilität einer Hydropulsanlage:

> Der geschlossene Regelkreis ist dann und nur dann
> stabil, wenn die Ortskurve der Übertragungsfunktion
> (w/y)g - für den Fall, daß die Übertragungsfunktion
> F keine (konjugiert komplexe) Pole mit positiven
> Realteilen aufweist - den Ursprung umschließt.

Außerdem ist es möglich, wie in Fig. 4b und 4c dargestellt, anhand der Ortskurve (w/y)g den Amplitudenrand Ar sowie den
Phasenrand $\varphi$r zu ermitteln, womit dann, auf der Grundlage
von Fig. 3, auf das Dämpfungsverhalten des geschlossenen Regelkreises geschlossen werden kann. Es kann also die Aussage gemacht werden, daß die Ortskurve (w/y)g die gleiche Information
enthält wie die Nyquist-Ortskurve F. Im Hinblick auf die Durchführung von Untersuchungen an Hydropulsmaschinen soll jedoch hier nochmals darauf hingewiesen werden, daß die Ortskurve (w/y)g direkt meßbar ist, die Ortskurve F jedoch experimentell nicht direkt ermittelt werden kann. Aufbauend auf den hier gewonnenen Erkenntnissen wird im folgenden Abschnitt eine praktische Vorgehensweise zum optimalen Einstellen des PID-Verhaltens von Reglerkompensationsnetzwerken angegeben.

Bei der Einstellung des PID-Verhaltens des Reglerkompensationsnetzwerkes wird wie folgt vorgegangen:

a)   Es wird - in Abhängigkeit vom erwünschten Dämpfungsverhalten des Systems - ein Phasenrand $\varphi_r$ vorgegeben (Fig. 3).

b)   Während des Einstellvorganges am Kompensationsnetzwerk wird für die im geschlossenen Reglerkreisbetrieb betriebene Hydropulsmaschine laufend die Ortskurve (w/y)g gemessen. Während dieser (On-Line) Messung wird die PID-Einstellung des Kompensationsnetzwerkes auf iterativem Wege durchgeführt. Im Hinblick auf eine optimale Einstellung muß es als ein Ziel angesehen werden, den vorgegebenen Phasenrand $\varphi_r$ bei einem noch zufriedenstellenden Amplitudenrand Ar zu erreichen.

Es ist zu bemerken, daß:

a)   mit dem ID-Anteil des Kompensationsnetzwerkes die Lage der (w/y)g-Ortskurve gedreht werden kann.

b)   Mit dem P-Anteil der Durchmesser der Ortskurve geändert werden kann.

Die Möglichkeit einer voneinander unabhängigen Einstellung der P- und ID-Anteile des Kompensationsnetzwerkes erlaubt es den Durchmesser und die Lage der Ortskurve (w/y)g in weiteren Bereichen zu verändern.

Folgende positive Aspekte, welche eine Einstellung des PID-Netzwerkes auf der Basis der Ortskurve (w/y)g befürworten, sollen hier aufgeführt werden:

a) Die Optimierung der Reglereinstellung kann nach einer klaren Vorschrift durchgeführt werden.

b) Die Auswirkung einer Änderung der Einstellung des Kompensationsnetzwerkes können nicht nur qualitativ, sondern auch quantitativ in Form von Zahlenwerten für den Amplituden- und Phasenrand erfaßt werden. Quantitative Aussagen ermöglichen es auch dem unerfahrenen Versuchsingenieur, zu erkennen, wie empfindlich die (w/y)g-Ortskurve auf Änderungen der Kompensationsnetzwerkseinstellung reagiert und in welcher Weise sich diese Ortskurve dem Stabilitätsgrenzpunkt nähert. Dabei kann deutlich unterschieden werden, ob eine Instabilität des Systems durch einen nicht hinreichenden Phasenrand oder durch einen nicht ausreichenden Amplitudenrand hervorgerufen wird.

Erst die quantitative Erfassung der Reglerstabilität ermöglicht eine gefahrlose Erhöhung der Verstärkung (P-Anteil) des Kompensationsnetzwerkes bis zu extremen Werten. Dies wiederum führt zu einer Verringerung der Regelabweichung.

- 13 -

c) Weil bei den durchzuführenden Untersuchungen zur experimentellen Ermittlung der Ortskurve (w/y)g der Regelkreis
in einem weiten Frequenzbereich durch das Führungssignal
angeregt werden muß, kann davon ausgegangen werden, daß
auch höherfrequentere Instabilitäten nicht unentdeckt
bleiben.

d) Auch (In-)Stabilitätseffekte, die auf das elastomechanische Verhalten des Prüfaufbaus / Prüfkörpers zurückzuführen sind, können anhand des Ortskurvenverlaufs von (w/y)g
erkannt werden. Bei diesen schwierigeren Fällen ist es durchaus
denkbar, daß ein vorgegebener Phasenrand nicht erreicht
werden kann. Es besteht jedoch auch in diesen Fällen die
Möglichkeit, mit Hilfe des hier vorgeschlagenen Verfahrens,
das Kompensationsnetzwerk wieder bis an die Grenze zu optimieren.

Anhand von einigen Versuchsergebnissen werden im folgenden
praktische Beispiele gezeigt.

Es wird eine Hydropulsmaschine verwendet, bei der die Auslenkung des Hydropulszylinders über eine Wegregelung kontrolliert
wird. Bei den Versuchen war der Arbeitskolben des Hydropulszylinders mit einer starren Masse belastet.

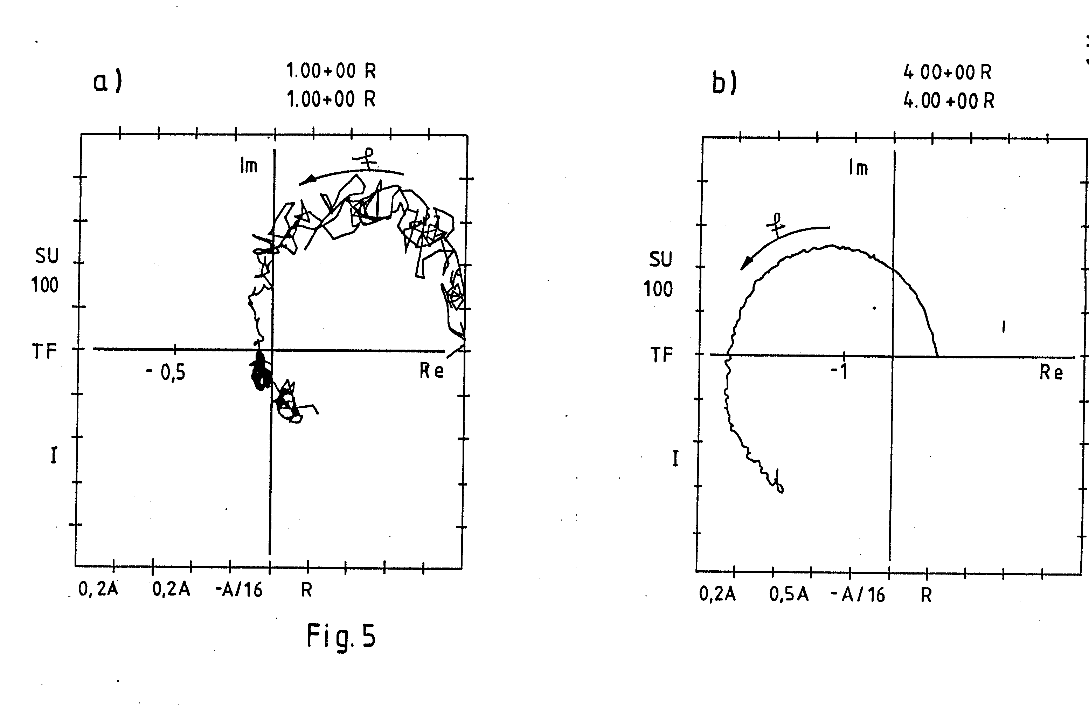

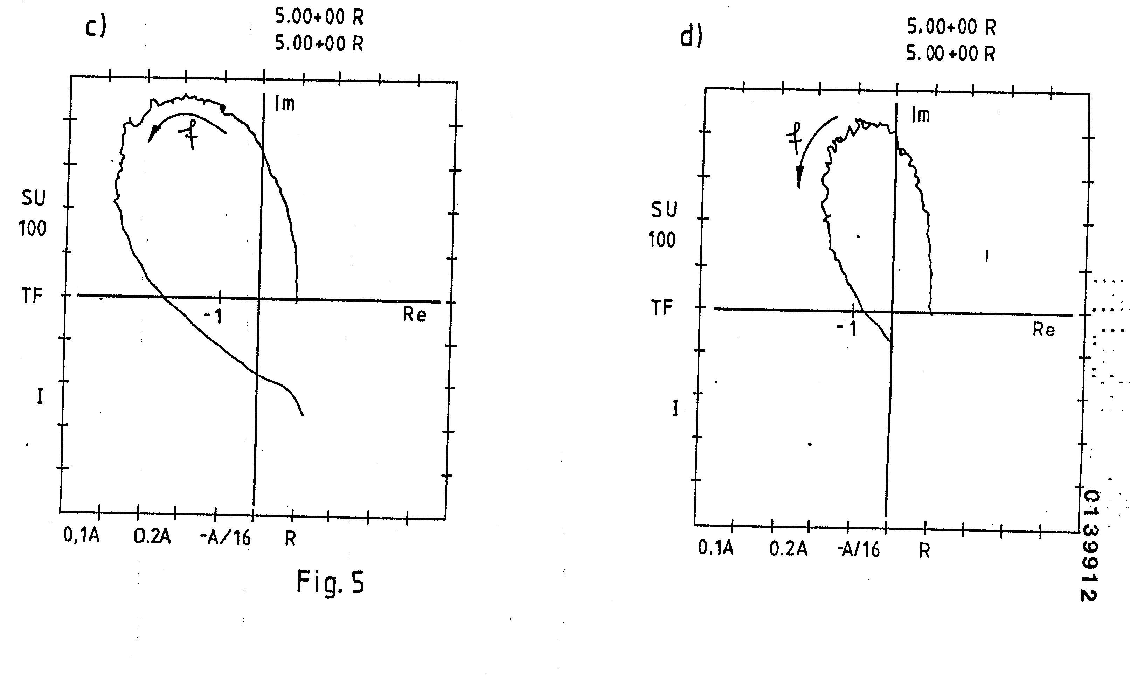

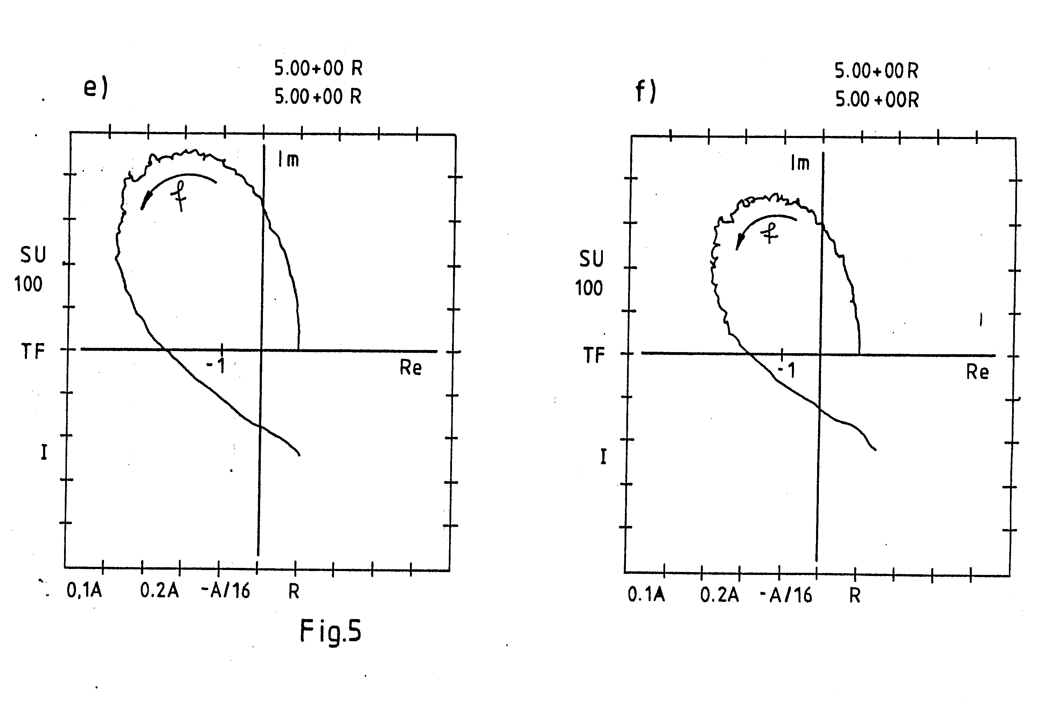

Fig. 5a zeigt die gemessene Ortskurve (w/y)g für eine Hydropulsmaschine, die sich an der Grenze der Stabilität befindet.
Der Amplitudenrand beträgt hier nur noch in etwa $A_r = 1,1$. In
Fig. 5b ist die Ortskurve (w/y)g für eine weitgehend optimierte Einstellung des Reglerkompensationsnetzwerkes dargestellt. In diesem Fall beträgt der Phasenrand $\varphi_r = 60°$ und der
Amplitudenrand $A_r = 4,5$.

- 14 -

In den Fig. 5c bis 5f ist dargestellt, wie die Lage der Ortskurve (w/y)g durch Variation des PID-Verhaltens des Kompensationsnetzwerkes geändert werden kann. Die Fig. 5c und 5e
zeigen jeweils die gleiche Referenzortskurve. Der Unterschied
der in den Fig. 5c und 5d dargestellten Ortskurven besteht
darin, daß in Fig. 5d der D-Anteil des Kompensationsnetzwerkes
erhöht wurde. Die Fig. 5e und 5f zeigen, wie sich die Ortskurve (w/y)g bei einer Erhöhung des P-Anteiles (Verstärkung)
ändert.

In bezug auf die Auswirkung einer Änderung des PID-Verhaltens
von Reglerkompensationsnetzwerken auf die Lage der Ortskurve
(w/y)g kann folgende allgemeingültige Aussage gemacht werden:

a) Eine Erhöhung des P-Anteiles verkleinert den Durchmesser
der Ortskurve;

b) eine Erhöhung des D-Anteiles dreht die Ortskurve im Uhrzeigerdrehsinn;

c) eine Erhöhung des I-Anteiles dreht die Ortskurve im entgegengesetzten Uhrzeigerdrehsinn.

Die hier angegebenen Ergebnisse aus experimentellen Untersuchungen verdeutlichen die Funktionsfähigkeit des hier vorgeschlagenen Verfahrens bei praktischen Anwendungen. Die Ergebnisse zeigen, daß mit dieser Vorgehensweise die Reglerstabilitätsgrenzen eindeutig festgestellt werden können. Anhand der (w/y)g-Ortskurve kann nicht nur festgestellt werden,
daß die Stabilitätsgrenze des Systems erreicht wird, sondern
auch wie sie erreicht wird (nicht hinreichender Phasen- oder
Amplitudenrand). Erst diese Erkenntnis ermöglicht jedoch ein
gezieltes Vorgehen beim Einstellen des PID-Verhaltens von
Reglerkompensationsnetzwerken.

Im Folgenden wird ein Überblick der meßtechnischen Einrichtung gegeben, mit der eine laufende (On-Line) Auswertung der Ortskurve (w/y)g aus dem zeitlichen Verlauf der Meßgrößen w und y vorgenommen werden kann.

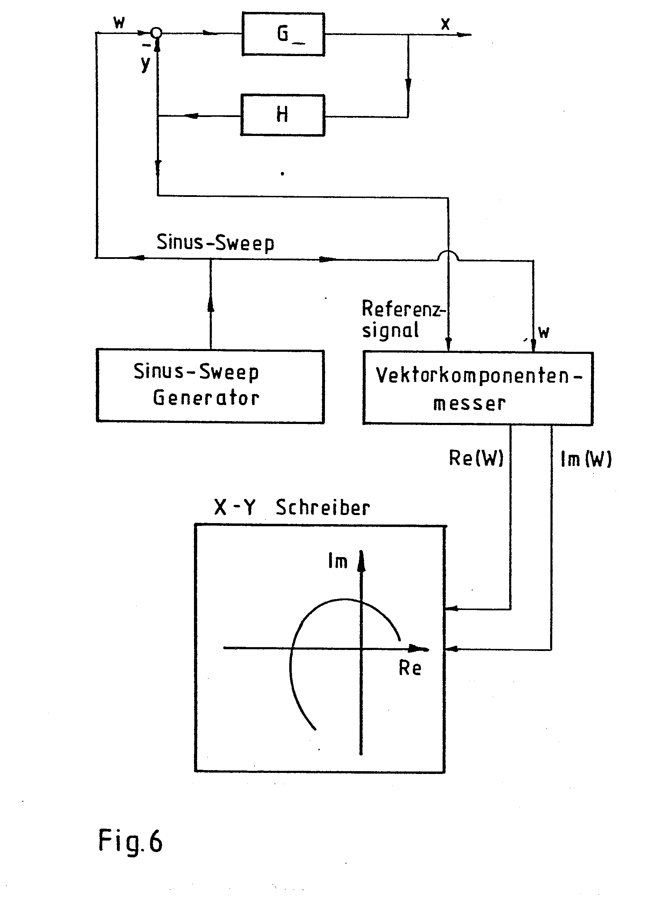

Es gibt verschiedene Möglichkeiten zum Erstellen der Ortskurve (w/y)g. Eine Vorgehensweise besteht darin, den Sollwerteingang bei verschiedenen Frequenzen harmonisch über einen Sinus-Generator zu erregen und für jede Frequenzeinstellung jeweils den Sollwert w und den Istwert mit Hilfe eines Vektor-Komponentenmessers miteinander zu korrelieren (Fig. 6). Eine schnelle Erstellung der Ortskurve ist bei dieser Vorgehensweise dann möglich, wenn

a)  der Sinus-Generator einen (langsamen) Frequenz-Sweep als Sollwertsignal in den Regelkreis einspeist,

b)  der Istwert dem Vektorkomponentenmesser als Referenzsignal zugeführt wird,

c)  die am Vektorkomponentenmesser anliegenden Gleichspannungen der Real- und Imaginärteile des Sollwertes w mit Hilfe eines x-Y-Schreibers direkt in Form einer Ortskurve aufgetragen werden.

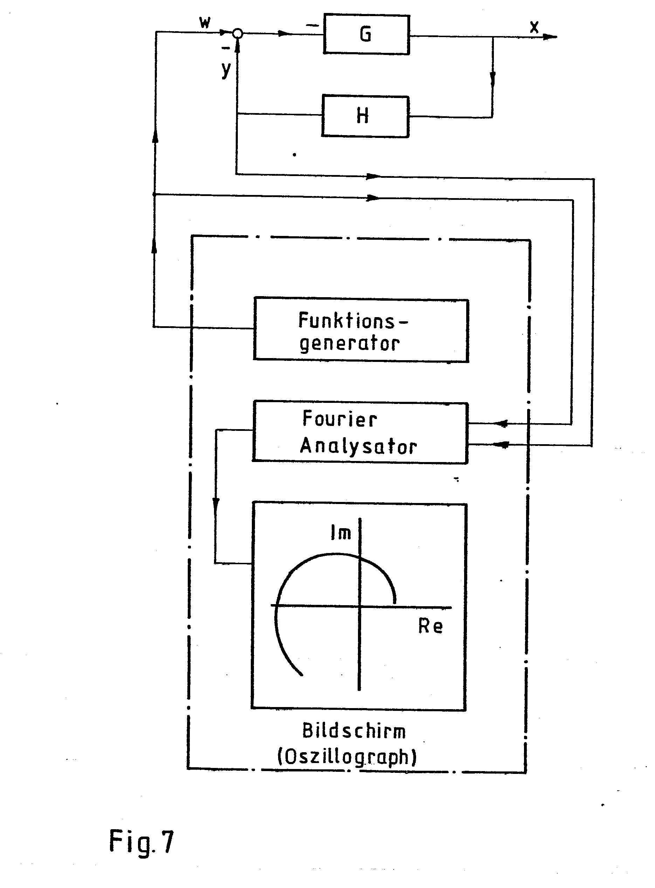

Eine andere Möglichkeit zum Erstellen der Ortskurve (w/y)g besteht darin, die Soll- und Istwerte des (geschlossenen) Regelkreises mit Hilfe eines Fourier-Analysators vom Zeitbereich in den Frequenzbereich zu transformieren und den Frequenzgang (w/y)g zwischen beiden Größen zu berechnen. Dieser Frequenzgang ist dann noch grafisch in Form einer Ortskurve aufzutragen (Fig. 7).

Für die Fourier-Analyse können leistungsfähige Kleinrechner
Verwendung finden. Diese lassen sich mit einem Funktionsgenerator kombinieren, der zur Erzeugung des Führungssignals
(hier Sollwert w) genutzt werden kann. Auch kann die gemessene Ortskurve (w/y)g direkt auf einem Bildschirm (Speicher-
oszillograph) dargestellt werden.

Der Vorteil eines Einsatzes dieser Geräte gegenüber der
Vektorkomponentenmeßtechnik liegt in ihrer hohen Datenverarbeitungsgeschwindigkeit. Im Hinblick auf den Einsatz eines
Fourier-Analysator-Systems zur On-Line Überwachung des Reglereinstellvorganges bei Hydropulsmaschinen - auf der Grundlage
des hier vorgeschlagenen Verfahrens -, werden im folgenden
einige Spezifikationen aufgeführt, die bei der in Fig. 7 durch
einen strichpunktierten Rahmen umgebenen Messeinrichtung für
den hier vorgesehenen Einsatz erfüllt sein sollten.

a) Funktionsgenerator

Es ist ein Sinus-Generator mit automatischer Frequenz-Sweep-
Einrichtung einzusetzen.
Die Sweep-Geschwindigkeit soll eine logarithmische Funktion
der Frequenz sein, so daß im unteren Frequenzbereich langsam,
im höheren Frequenzbereich jedoch schnell gesweept wird. Die
Dauer eines Sweeps von O Hz bis zur Endfrequenz soll ca. 15
Sekunden betragen.
Der Frequenzbereich soll in Stufen einstellbar sein (z.B. 1.
Stufe: f = O...5o Hz, 2. Stufe: f = O...1oo Hz, 3. Stufe: f =
O...15o Hz, 4. Stufe: f = O...2oo Hz).
Die Amplitude der Generator-Ausgangsspannung muß im Bereich
von O...≈5oo mV stufenlos einstellbar sein.
Der Generator soll mit einer Sweep-Wiederholeinrichtung versehen sein, so daß nach dem Erreichen der Sweep-Endfrequenz ein automatischer Rücksprung zur Startfrequenz (O Hz) erfolgt und dann wieder ein neuer Sweeplauf gestartet wird.

b) <u>Fourier-Analysator</u>

Es kann eines der handelsüblichen Systeme eingesetzt werden.
Vorteilhaft ist es, wenn die Fourier-Analyse des gesamten
Frequenzbereichs schrittweise für verschiedene sich überlappende Frequenzbänder durchgeführt wird. Dabei soll mit
der Analyse im unteren Frequenzbereich begonnen werden, was
deswegen sinnvoll ist, weil auch das Führungssignal w von
tiefen zu höheren Frequenzen gesweept wird. Durch die Frequenzbandanalyse wird die wohl schnellste Ausgabe von Meßergebnissen ermöglicht. Weiterhin ist darauf zu achten, daß
die Frequenzbereiche des Fourier-Analysators mit den abgestuft einstellbaren Bereichen des Generators übereinstimmen.

c) <u>Bildschirm</u>

Für die Darstellung der Ortskurve $(w/y)_g$ auf dem Speicheroszillographen-Bildschirm kann die bei handelsüblichen Geräten verwendete Form der Auftragung von Nyquist-Diagrammen gewählt
werden. Es ist jedoch sinnvoll, auf dem Bildschirm einige
Zahlenwerte einzublenden, die dem Versuchsingenieur z.B. Auskunft über die momentanen Werte für den Amplituden- und Phasenrand geben.

Die serienmäßige Herstellung eines Fourier-Analysatorgerätes
inklusive der hier beschriebenen Peripherie-Geräte verursacht
keine Probleme. Im Hinblick auf die serienmäßige Ausrüstung
von Hydropulsmaschinen mit einem Fourier-Analysator-System ist
die Herstellung von einfachen kleinen und demzufolge auch
billigen Geräten sinnvoll.

- 18 -

Im Folgenden wird gezeigt, wie die oben beschriebene Meßeinrichtung, durch Erweiterung der Rechnereinheit und durch das
Hinzufügen eines Datenspeichers zur Überwachung von zeitlichen
Änderungen an Prüfaufbauten / Prüfkörpern eingesetzt werden
kann. Eine Überwachung des Betriebes einer Hydropulsmaschine
ist oft bei Langzeitversuchen wünschenswert. So kann es z.B.
sinnvoll sein, die dynamische Erregung des Arbeitszylinders
beim Auftreten der ersten Risse an Prüfkörpern abzuschalten
oder die Hydropulsmaschine vollkommen abzuschalten, falls an
einem Versuchsaufbau ein Teil abbricht.

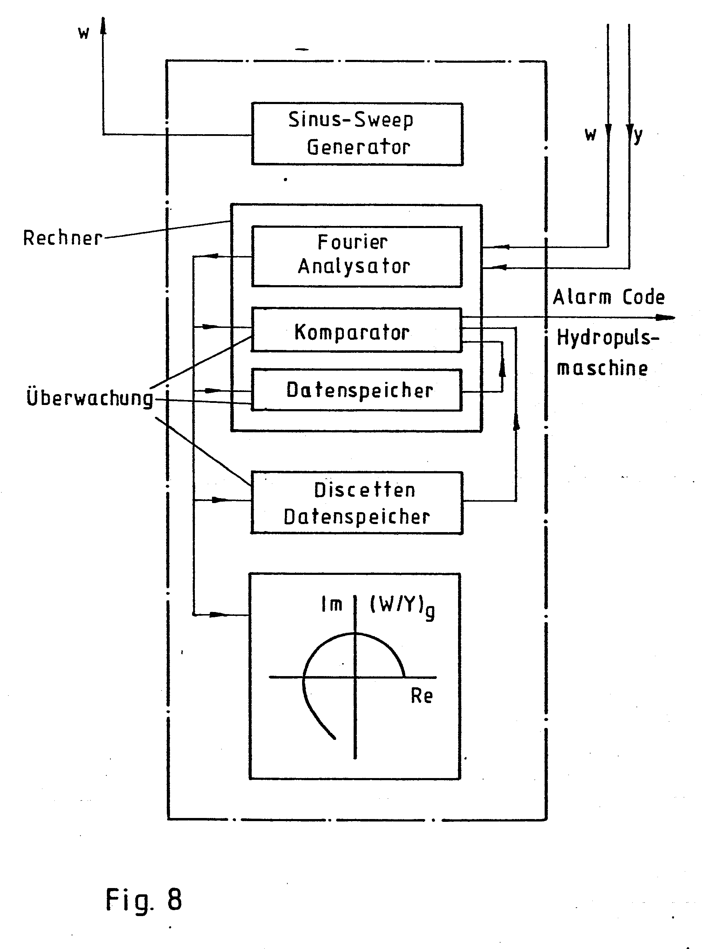

Wie schon erwähnt wurde, ist das Übertragungsverhalten der
Regelstrecke der Hydropulsmaschine vom Prüfaufbau / Prüfkörper
abhängig. Bei einer Änderung des dynamischen Verhaltens des
Prüfaufbaus / Prüfkörpers wird sich also eine Veränderung im
Übertragungsverhalten der Regelstrecke einstellen. Diese Änderung kann anhand der Ortskurve (w/y)g festgestellt werden. Um
rechtzeitig eine Veränderung des elastomechanischen Verhaltens
des Prüfaufbaus / Prüfkörpers festzustellen, genügt es also,
in regelmäßigen Abständen die zu verschiedenen Zeitpunkten ermittelten Ortskurven (w/y)g miteinander zu vergleichen. Dafür
ist es erforderlich, die Meßeinrichtung mit einem Datenspeicher
zu versehen - in dem Koordinaten von Ortskurven gespeichert
werden können -, so daß die Werte der zum Zeitpunkt to gemessenen Ortskurve mit denjenigen der aktuellen Ortskurve zum Zeitpunkt to + $\Delta$t in einem Komparator miteinander verglichen werden
können (Fig. 8). Dabei kann es sich bei $\Delta$t um ein Zeitintervall
in der Größenordnung von Minuten oder auch Monaten handeln.

Der Komparator arbeitet auf digitaler Basis. Er vergleicht bei
verschiedenen Frequenzen jeweils die Koordinaten der beiden zu
vergleichenden Ortskurven miteinander und summiert die sich
ergebenden quadratischen Differenzen auf. Überschreitet der Summenwert der Abweichungen einen vorgegebenen Grenzwert, so wird der Alarm-Code der Hydropulsmaschine ausgelöst. Je nach Art des (für die Fourier-Analyse) eingesetzten Rechners empfiehlt es sich, den Aufbau des Komparators entweder primär auf hardware- oder auf softwaremäßiger Basis zu realisieren.

Für die experimentelle Ermittlung der Ortskurve $(w/y)g$ während Langzeitversuchen gibt es zwei verschiedene Möglichkeiten:

a)  Beim Sollwert des laufenden Versuchs handelt es sich um ein elektrisches Signal mit einem breitbandigen Frequenzspektrum. Dann kann dieses Sollwertsignal mit dem entsprechenden Istwert im Fourier-Analysator korreliert werden und die Ortskurve $(w/y)g$ während des laufenden Versuchs dauernd ermittelt werden.

b)  Beim Sollwert des laufenden Versuchs handelt es sich um ein elektrisches Signal mit einem schmalbandigen Frequenzspektrum (evtl. Linienspektrum). Dann ist es nicht mehr möglich, aus diesem Sollwert und dem entsprechenden Istwert auf den Verlauf der Ortskurve $(w/y)g$ zu schliessen. Es ist dann erforderlich, in regelmäßigen Zeitabständen den Langzeitversuch zu stoppen und - wie beim PID-Einstellvorgang - die Regelkreiserregung über den Sinus-Sweepgenerator vorzunehmen. Dabei haben die bei diesen Überwachungsuntersuchungen auftretenden Lastwechsel auf den Langzeitversuch keine Bedeutung, da sowohl die Lastwechselzahl als auch die Amplitude der Erregung gering sind.

Es kann davon ausgegangen werden, daß mit der hier vorgeschlagenen Vorgehensweise Änderungen im elastomechanischen
Verhalten des Prüfaufbaus / Prüfkörpers frühzeitig erkannt
werden. Bei vielen Versuchen kann dadurch eine große Zeitersparnis gewonnen werden, da die häufig durchgeführten
optischen Kontrollen des Prüfaufbaus / Prüfkörpers und
die damit oft verbundenen Montage- und Demontagearbeiten
entfallen können. Außerdem ist es empfehlenswert, die Werte
einiger zeitlich zuletzt gemessener (w/y)g-Ortskurven in
einem Discetten-Datenspeicher aufzubewahren. Dadurch wird
die Möglichkeit gegeben, den zeitlichen Verlauf eines
Schadenfalles in detaillierter Form zu analysieren.

BIBRACH & REHBERG 0139912

ANWALTSSOZIETÄT

BIBRACH & REHBERG, POSTFACH 14-53, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPEENS

TELEFON: (0551) 45034/35
TELEX: 96616 bipat d
POSTSCHECKKONTO: HANNOVER
(BLZ 250100 30) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

IHR ZEICHEN
YOUR REF.
VOTRE REF.

IHR SCHREIBEN VOM
YOUR LETTER
VOTRE LETTRE

UNSER ZEICHEN
OUR REF.
NOTRE REF.

11.431/n8

D-3400 GÖTTINGEN,
PÜTTERWEG 6

17.8.1983

Deutsche Forschungs- und Versuchsanstalt für Luft- und
Raumfahrt e.v.,Linder Höhe, 5000 Köln 90

Verfahren und Vorrichtung zur Einstellung des PID-Verhaltens
von Reglerkompensationsnetzwerken, insbesondere bei Hydropulsmaschinen

P a t e n t a n s p r ü c h e :

1. Verfahren zur Einstellung des PID-Verhaltens von Reglerkompensationsnetzwerken, insbesondere bei Hydropulsmaschinen,
dadurch gekennzeichnet, daß bei geschlossenem Regelkreis
dessen Stabilitätsortskurve bestimmt und das Reglerkompensationsnetzwerk so lange verstellt wird, bis die Stabilitätsortskurve einen gewünschten Verlauf aufweist.

2. Verfahren nach Anspruch 1, dadurch gekennzeichnet, daß die
Stabilitätsortskurve eine Transformierte der sog. Nyquist-Ortskurve darstellt.

3. Verfahren nach Anspruch 1 und 2, dadurch gekennzeichnet, daß dem Regelkreis ein frequenzbreitbandiges Sollwertsignal zugeführt wird und das sich ergebende Istwertsignal gemessen und beide Signale zur Bestimmung der Stabilitätsortskurve miteinander korreliert werden.

4. Verfahren nach Anspruch 3, dadurch gekennzeichnet, daß als Sollwertsignal ein sog. Sinus-Sweep-Signal zur Anwendung gelangt.

5. Verfahren nach Anspruch 3, dadurch gekennzeichnet, daß als Sollwertsignal ein sog. Random-Signal zur Anwendung gelangt.

6. Verfahren zur Überwachung von zeitlichen Änderungen von Prüfkörpern bei mit PID-Reglerkompensationsnetzwerken ausgestatteten Hydropulsmaschinen, dadurch gekennzeichnet, daß bei geschlossenem Regelkreis dessen Stabilitätsortskurven zu verschiedenen Zeitpunkten bestimmt werden und laufend (in einem Komparator) miteinander verglichen werden.

7. Verfahren nach Anspruch 6, dadurch gekennzeichnet, daß die bei der laufenden Stabilitätsortskurvenbestimmung anfallenden Meßwerte aufgezeichnet und gespeichert werden.

8. Vorrichtung zur Durchführung der Verfahren nach Anspruch 1 bis 7, gekennzeichnet durch einen Sinusgenerator zur Erzeugung des Sollwertes und einem Vektorkomponentenmesser zur Erfassung der Ist- und Sollwerte des geschlossenen Regelkreises.

9. Vorrichtung nach Anspruch 8, dadurch gekennzeichnet, daß der Sinusgenerator als Sweep-Generator ausgebildet ist.

1o. Vorrichtung nach Anspruch 8, dadurch gekennzeichnet, daß dem Vektorkomponentenmesser ein X-Y-Schreiber zur direkten Darstellung der Ortskurve nachgeschaltet ist.

11. Vorrichtung zur Durchführung der Verfahren nach Anspruch 1 bis 7, gekennzeichnet durch einen Funktionsgenerator zur Erzeugung des Sollwertes und einem Fourier-Analysator zur Verarbeitung der Ist- und Sollwerte des geschlossenen Regelkreises.

12. Vorrichtung nach Anspruch 11, dadurch gekennzeichnet, daß dem Fourier-Analysator ein Speicher-Oszillograph zur Darstellung der gemessenen Ortskurve zugeordnet ist.

13. Vorrichtung nach Anspruch 11 und 12, dadurch gekennzeichnet, daß dem Fourier-Analysator ein Datenspeicher zur Speicherung der Meßwerte zugeordnet ist.

14. Vorrichtung nach Anspruch 13, dadurch gekennzeichnet, daß dem Fourier-Analysator ein Komparator zum Vergleich der im Datenspeicher vorhandenen Meßwerte mit den neu eingehenden Meßwerten zugeordnet ist.

15. Vorrichtung nach Anspruch 11 bis 14, dadurch gekennzeichnet, daß der Fourier-Analysator der Datenspeicher und der Komparator digital arbeitende Einrichtungen sind.

16. Vorrichtung nach Anspruch 15, dadurch gekennzeichnet, daß die digitalen Einrichtungen mindestens einen Rechner enthalten.

0139912

Fig.1a

Fig. 1b

Fig. 1c

2/9

Fig. 2

**Erhöhung der Regelkreisverstärkung**

**Geschlossener Kreis ist instabil**

**Geschlossener Kreis ist stabil**

**Einheits-teilkreis**

Fig. 3

| Nyquist-Ortskurve F | Ortskurve $(W/Y)_g$ |
|---|---|

$(-1, i \cdot 0) \longleftrightarrow (0, i \cdot 0)$

a) Stabilitätsgrenzpunkte

$(-0.5, -i\, 0.87) \longleftrightarrow (0.5, i \cdot 0.87)$

b) Phasenrand $\varphi_r = 60°$

c) Amplitudenrand $A_r$
   Phasenrand $\varphi_r$

Fig. 4

a)

$$1.00+00 \ R$$
$$1.00+00 \ R$$

b)

$$4.00+00 \ R$$
$$4.00+00 \ R$$

Im

SU
100

TF

− 0,5

Re

I

0,2A   0,2A   −A/16   R

Fig. 5

Im

SU
100

TF

−1

Re

I

0,2A   0,5A   −A/16   R

c)

5.00+00 R
5.00+00 R

Im

SU
100

TF

−1

Re

I

0,1A   0.2A   −A/16   R

Fig. 5

d)

5.00+00 R
5.00 +00 R

Im

SU
100

TF

−1

Re

I

0.1A   0.2A   −A/16   R

Fig.5

Fig.6

Fig. 7

0139912

Fig. 8